**Europäisches Patentamt**

**European Patent Office**

**Office européen des brevets**

(19)

(11) Veröffentlichungsnummer: **0 101 475**
**B1**

(12) # EUROPÄISCHE PATENTSCHRIFT

(45) Veröffentlichungstag der Patentschrift:
**02.10.85**

(21) Anmeldenummer: **83900703.6**

(22) Anmeldetag: **16.02.83**

(86) Internationale Anmeldenummer:
**PCT/DE 83/00029**

(87) Internationale Veröffentlichungsnummer:
**WO 83/02922 (01.09.83** Gazette 83/20)

(51) Int. Cl.⁴: **B 60 J 5/04, B 62 D 33/04**

(54) **KASTENAUFBAU, INSBESONDERE FÜR LASTFAHRZEUGE, MIT EINER AUFKLAPPBAREN SEITENWAND.**

(30) Priorität: **17.02.82 DE 3205657**

(43) Veröffentlichungstag der Anmeldung:
**29.02.84 Patentblatt 84/9**

(45) Bekanntmachung des Hinweises auf die Patenterteilung:
**02.10.85 Patentblatt 85/40**

(84) Benannte Vertragsstaaten:
**AT BE CH DE FR GB LI LU NL SE**

(56) Entgegenhaltungen:
**DE - A - 2 358 186**
**DE - A - 2 710 141**
**DE - A - 3 017 729**
**DE - C - 47 944**
**DE - U - 8 204 405**
**FR - A - 355 012**
**US - A - 1 857 936**

(73) Patentinhaber: **Dinkel, Kurt, Schwarzwaldstrasse 16,
D-6980 Wertheim 2 (DE)**

(72) Erfinder: **DINKEL, Kurt, Schwarzwaldstrasse 16,
D-6980 Wertheim 2 (DE)**
Erfinder: **ENDRESS, Rudolf, Brehmenweg 1,
D-6980 Wertheim-Lindelbach (DE)**

(74) Vertreter: **Strohschänk, Heinz, Dipl.-Ing., Patentanwälte
Strohschänk, Uri & Strasser Innere Wiener Strasse 8,
D-8000 München 80 (DE)**

BUNDESDRUCKEREI BERLIN

**Beschreibung**

Die Erfindung bezieht sich auf einen Kastenaufbau gemäß der Gattung des Patentanspruchs 1. Ein Kastenaufbau dieser Art ist aus der DE-A-2 358 186 bekannt.

Kastenaufbauten gemäß der Gattung des Patentanspruchs 1 sind bereits unabhängig davon, ob das Oberteil der Seitenwand über oder unter das Dach hochschwenkbar ist, in zahlreichen Konstruktionen bekanntgeworden, die alle jedoch den Mangel aufweisen, daß die vom Unterteil der Seitenwand ausgehende Mitnahmeeinrichtung zur entsprechenden gleichzeitigen Öffnung und Schließung des Oberteils der Seitenwand entweder mit Seilzügen (vgl. z. B. die DE-A-2 414 642, DE-A-2 400 242, DE-A-2 710 141, DE-A-2 809 375, DE-A-2 813 593 und DE-A-2 905 561) empfindlich und störanfällig sowie wartungsbedürftig oder mit Gelenkkoppeln und teilweise zusätzlichen Gleitsteinführungen (vgl. z. B. die FR-A-1 532 600 und die DE-A-3 017 729) kompliziert und aufwendig sind und zum Teil auch viel Platz beanspruchen. Überdies haftet den meisten bekannten Konstruktionen der Mangel einer großen Unfallgefahr an, daß nämlich die Bedienungsperson beim Hochschwenken des unteren Teils mit einer Hand zwischen die hierbei zusammenkommenden Ränder von Ober- und Unterteil gelangt.

Der Erfindung liegt die Aufgabe zugrunde, die Aufbauten gemäß der Gattung des Patentanspruchs 1 so zu vervollkommnen, daß mit konstruktiv einfachen Mitteln und trotzdem ohne nennenswerten Wartungsaufwand den Schwenkbewegungen des Unterteils der Seitenwand im Sinne dessen Auf- und Zuklappung jederzeit zuverlässig in solcher Weise zugeordnete Öffnungs- und Schließungs-Schwenkbewegungen des Oberteils der Seitenwand zugeordnet bleiben, daß auch beim Schließen der Seitenwand praktisch keine Verletzungsgefahr für die Bedienungsperson mehr besteht.

Die gestellte Aufgabe ist, ausgehend von der Gattung des Patentanspruchs 1 durch die in dessen kennzeichnendem Teil wiedergegebene Lehre gelöst.

Die vorgeschlagene Mitnahmeeinrichtung stellt eine konstruktiv einfache und doch sehr zuverlässig arbeitende Getriebeverbindung dar, die an ihren Verbindungsstellen nur einer geringfügigen gelegentlichen Schmierung bedarf, wie sie auch schon bisher an den Lager- und Gelenkstellen aller bekannten Mitnahmeeinrichtungen erforderlich war. Dabei ist es besonders vorteilhaft, daß das aus einer Schließstellung der Seitenwand zu seiner Herabklappung herausgeschwenkte Unterteil infolge der zunächst nur minimalen Hubbewegung des unteren Anlenkpunktes der Zahnstange an dem in der Schließstellung nach unten ragenden Hebelarm des Unterteils der Aufwärtsschwenkung des Oberteils zunächst um etwa 10 bis 15° voreilt und beim Schließen der Seitenwand dem herabschwenkenden Oberteil entsprechend nacheilt, was bei in der Schließstellung bündig aneinanderliegenden Rändern des Oberteils und des Unterteils die Gefahr der Einklemmung einer bedienenden Hand praktisch ausschließt.

Die Voreilung des Unterteils beim Öffnen der Seitenwand und die Nacheilung desselben beim Schließen der Seitenwand machen es gemäß der Lehre des Patentanspruchs 2 auch möglich, zwischen den beiden Teilen der Seitenwand in deren Schließstellung einen dichten Verschluß herbeizuführen. Dabei wird durch die erfindungsgemäße Nacheilung des Unterteils beim Schließen der Seitenwand gewährleistet, daß die obere Randleiste des Unterteils stets in den richtigen Eingriff mit dem Oberteil — oberhalb von dessen unterer Randleiste — gelangt.

In den weiteren Unteransprüchen sind andere vorteilhafte konstruktive Ausgestaltungen der Erfindung gekennzeichnet.

Durch die AT-PS 233 629 ist eine nicht der Gattung der vorliegenden Erfindung entsprechende zweiteilige aufklappbare Seitenwand eines Eisenbahn-Güterwagens bekannt, bei der die beiden Teile beiderseits über je eine lotrechte Welle mit beiderseits je einem Kegelradpaar gekuppelt sind. Abgesehen davon, daß mit dieser Konstruktion kein Einschieben des Oberteils unter die Deckwand des Wagenkastens möglich ist, fehlt es auch an der vorteilhaften Möglichkeit, das Unterteil der Seitenwand bei seiner Schließbewegung gegenüber dem Oberteil nacheilen zu lassen — und umgekehrt.

In der Zeichnung ist die Erfindung beispielsweise veranschaulicht; es zeigt

Fig. 1 einen eine erste Ausführungsform der Mitnahmeeinrichtung aufweisenden Kastenaufbau in einem lotrechten Teilquerschnitt nach der Linie I-I der Fig. 3 (bei geschlossener Seitenwand);

Fig. 2 denselben Kastenaufbau in einem lotrechten Teilquerschnitt nach der Linie II-II der Fig. 3;

Fig. 3 denselben Lastenaufbau in einer Teilseitenansicht in Richtung des Pfeiles III der Fig. 1;

Fig. 4 bis 6 jeweils einen waagerechten Teilschnitt nach der Linie IV-IV, V-V und VI-VI der Fig. 3;

Fig. 7 einen der Fig. 1 entsprechenden Teilschnitt desselben Kastenaufbaus mit teilweise abgeklapptem Unterteil und entsprechend teilweise hochgeschwenktem Oberteil der Seitenwand;

Fig. 7a einen vergrößerten Ausschnitt der Fig. 7 an der Stelle VIIa (mit geänderter Anordnung der Rückholfeder);

Fig. 8 eine gleiche Schnittdarstellung bei ganz abgeklapptem Unterteil und ganz hochgeschwenktem Oberteil der Seitenwand;

Fig. 9 eine zweite Ausführungsform des Kastenaufbaus in einem der Fig. 1 entsprechenden lotrechten Teilschnitt (bei geschlossener Seitenwand);

Fig. 10 einen der Fig. 9 entsprechenden Teil-

schnitt bei geöffneter Seitenwand.

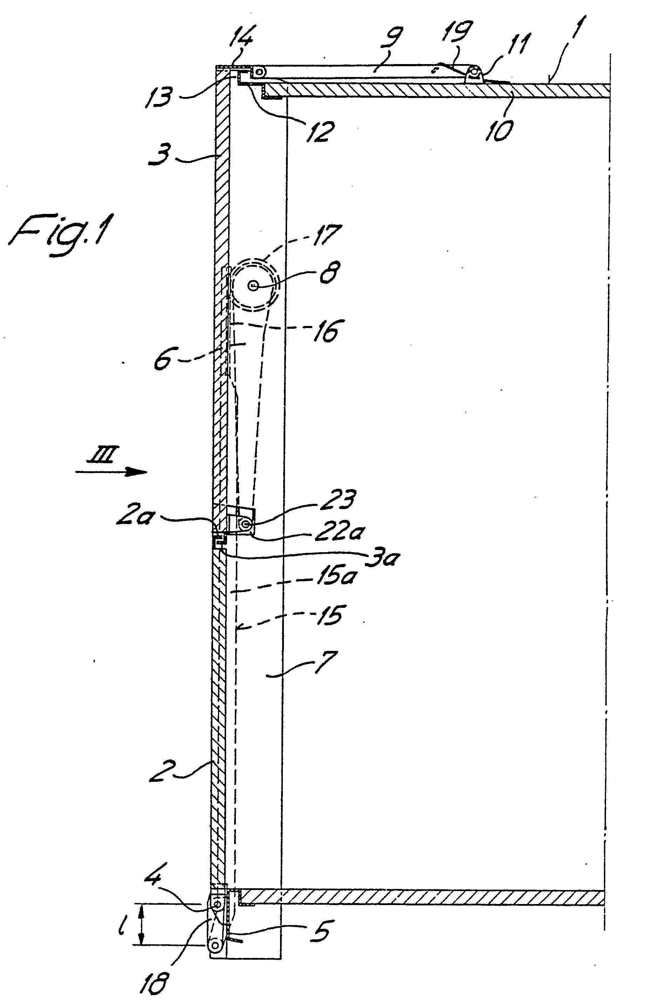

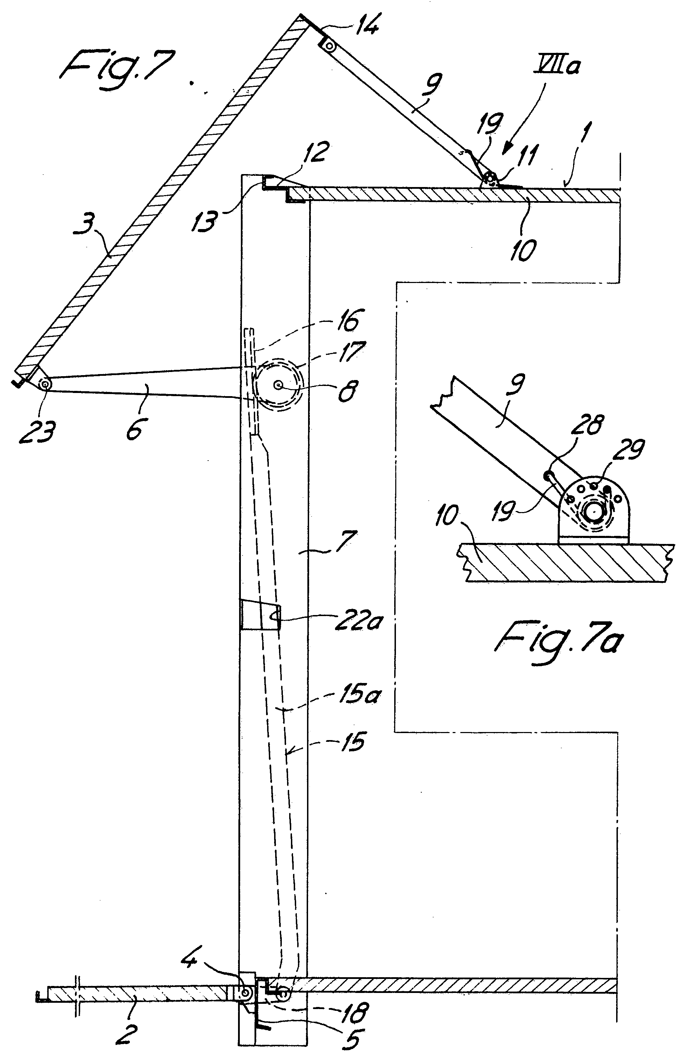

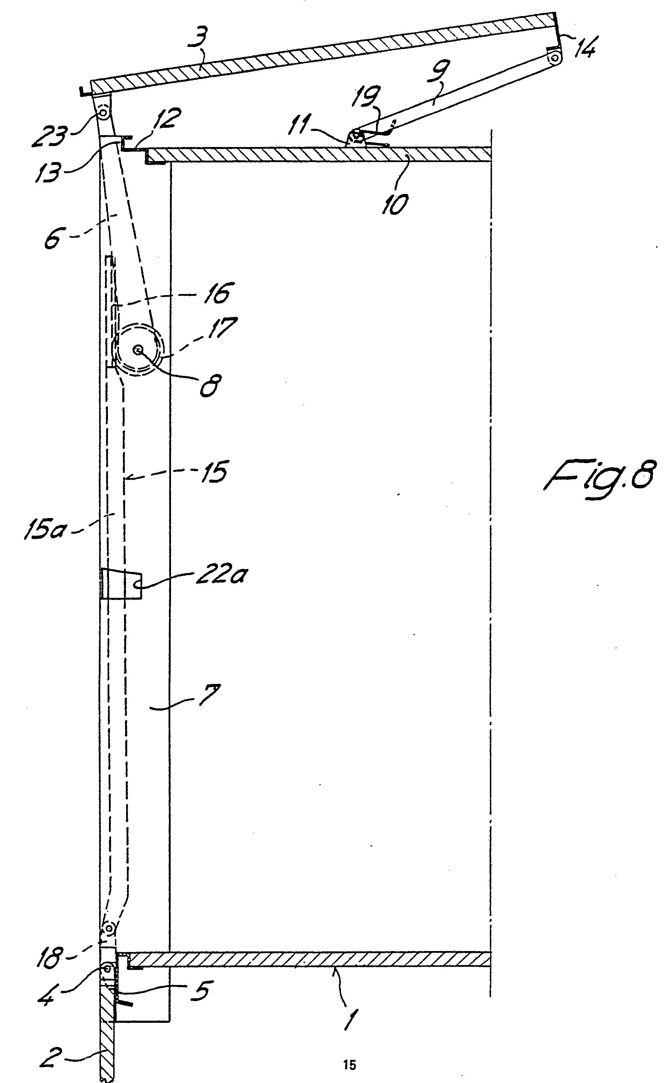

Gemäß dem in den Fig. 1 bis 8 dargestellten ersten Ausführungsbeispiel weist ein Kastenaufbau 1, der in nicht besonders dargestellter Weise Bestandteil eines Lastfahrzeuges, d. h. eines Lastkraftwagens oder eines zugeordneten Anhängers, sein kann, an wenigstens einer seiner von außen zugänglichen drei oder vier Seiten eine aus einem abklappbaren Unterteil 2 und einem hochschwenkbaren Oberteil 3 bestehende Seitenwand auf. Das Unterteil 2 ist an unteren äußeren Anlenkstellen 4 eines unteren seitlichen Längsträgers 5 des Kastenaufbaus 1 nach außen unten abklappbar angelenkt, während das Oberteil 3 beiderseits über je einen unteren Lenker 6 eines unteren Lenkerpaares in einer in der in Fig. 1 dargestellten Schließstellung etwa mittleren Höhe an benachbarten Seitenpfosten 7 des Kastenaufbaus 1 über je einen Lagerbolzen 8 und oben über je einen Lenker 9 eines weiteren Lenkerpaares an je einem auf dem Dach 10 befindlichen Lager 11 angelenkt ist.

Die oberen Lenker 9 weisen eine annähernd der halben Höhe des Oberteils 3 entsprechende Länge auf und ragen bei der aus Fig. 1 ersichtlichen Schließstellung der Seitenwand nur bis an den dortigen oberen seitlichen Längsträger 12 des Daches 10 heran, der mit seinem äußeren Rand 13 entsprechend nach oben ragt. Das Oberteil 3 weist an seinem oberen Rand dementsprechend eine quer nach dem Dach 10 hin vorstehende und in der aus Fig. 1 ersichtlichen Schließstellung über den vorgenannten Rand 13 greifende Deckleiste 14 auf, an deren äußerem Rand das obere Lenkerpaar 9, 9 angelenkt ist. Im übrigen ist der obere Längsträger 12 mit seinem äußeren Rand 13 aus nachstehend noch angeführten Gründen gegenüber dem äußeren Rand des zugeordneten unteren seitlichen Längsträgers 5 etwas zurückversetzt.

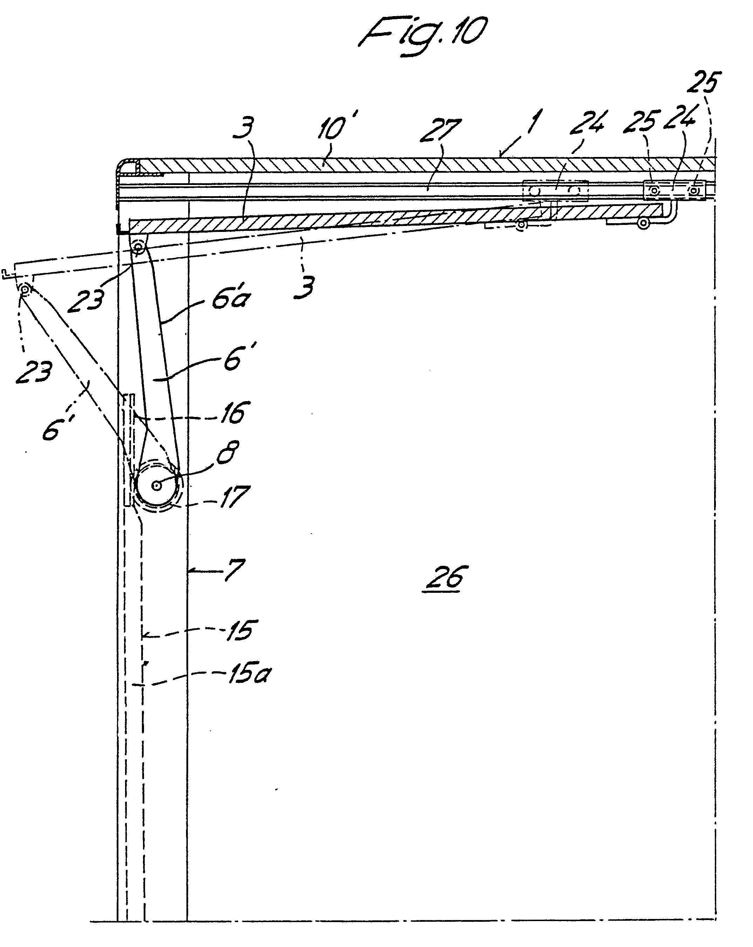

Das Oberteil 3 ist in grundsätzlich bekannter Weise mit dem Unterteil 2 der Seitenwand derart über eine Mitnahmeeinrichtung verbunden, daß beim Abklappen des Unterteils 2 auch das Oberteil 3 zugleich über das Dach 10 hochgeschwenkt wird, und umgekehrt. Im Gegensatz zu den bekannten Mitnahmeeinrichtungen weist dieselbe sowohl bei dem ersten Ausführungsbeispiel als auch bei dem in den Fig. 9 und 10 dargestellten zweiten Ausführungsbeispiel beiderseits der Seitenwand je einen Zahnstangen-Ritzeltrieb auf. Dessen Zahnstange 15 besteht aus einem entlang dem zugeordneten Seitenpfosten 7 geführten Stangenteil 15a mit einer oberen Verzahnung 16, in die ein Ritzel 17 eingreift, das am dortigen unteren Lenker 6 axial zu dessen am zugeordneten Seitenpfosten 7 gelagerten Lagerbolzen 8 festgelegt ist.

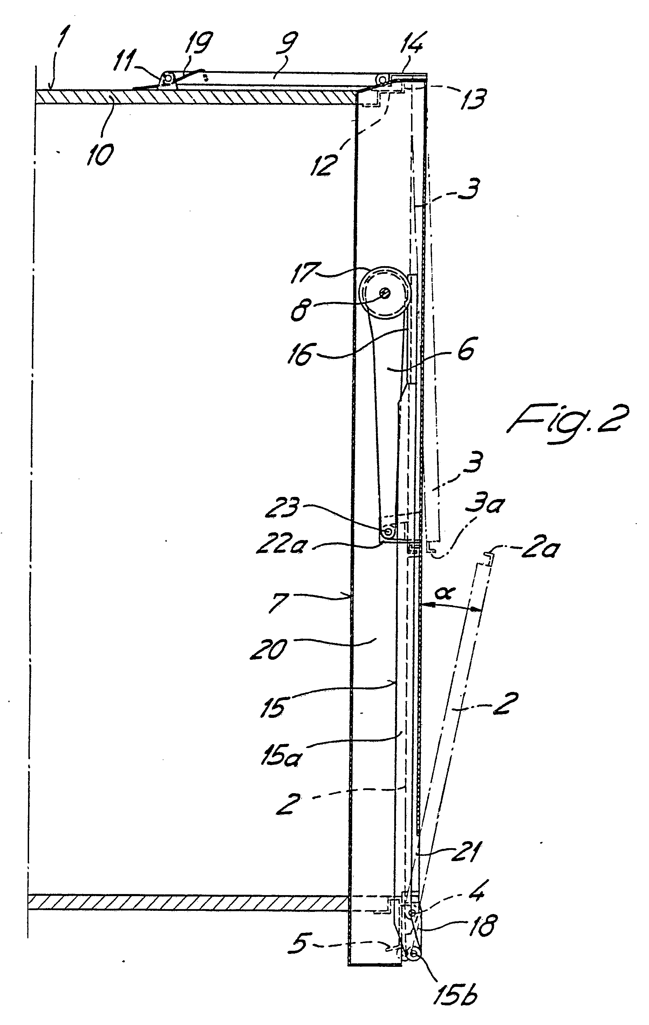

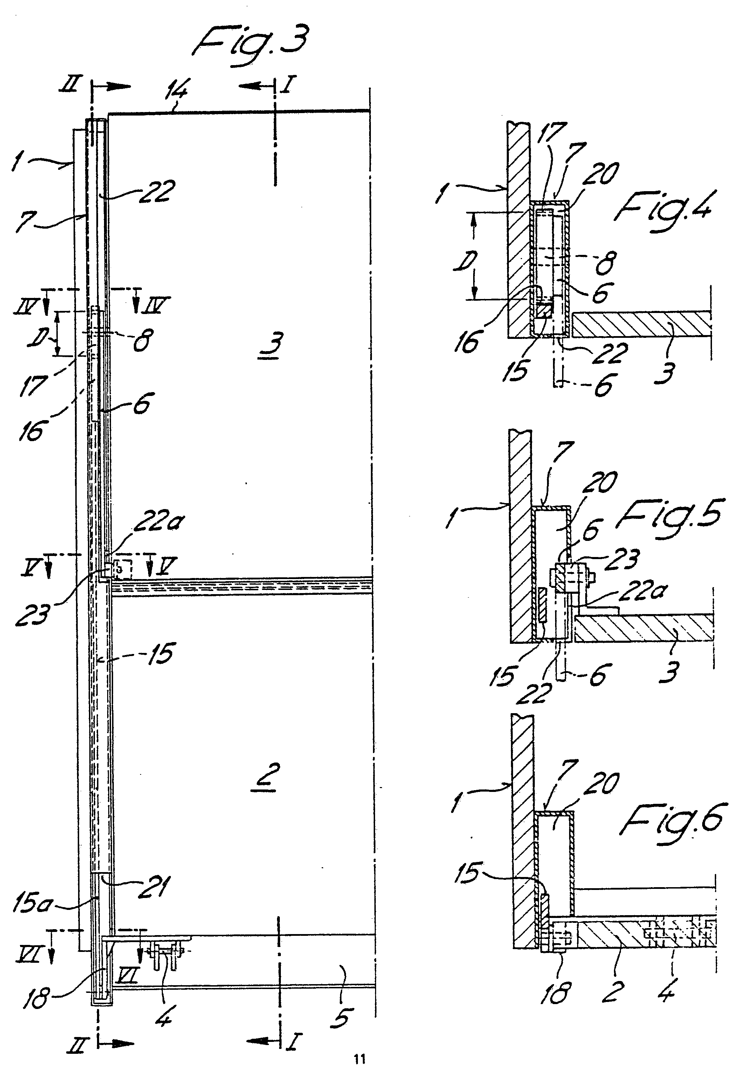

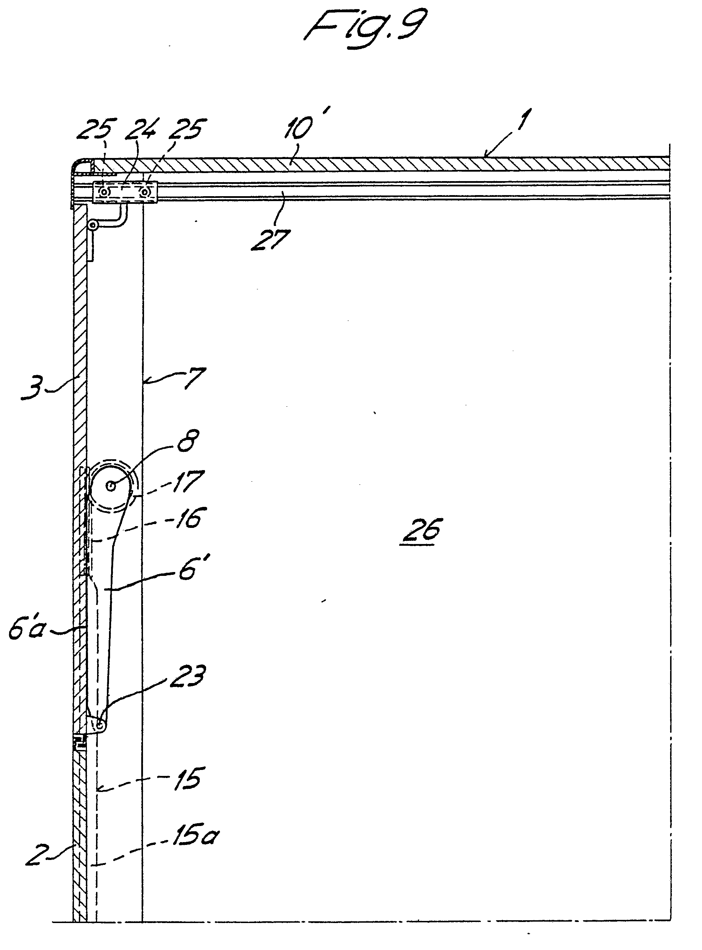

Wie insbesondere aus den Fig. 1 bis 3, 7 und 8 ersichtlich ist, trägt das Unterteil 2 beiderseits je einen in dessen Schließstellung nach unten ragenden Hebelarm 18, an dessen freiem Ende das untere Ende des Stangenteils 15a angelenkt ist. Der Teilkreisdurchmesser D (vgl. Fig. 3 und 4) des Ritzels 17 ist etwa 1,5mal so groß wie die Länge l (vgl. Fig. 1) des Hebelarmes 18, derart, daß beim Abklappen des Unterteils 2 und dementsprechend aus seiner nach unten ragenden Ausgangsstellung (vgl. Fig. 1 und 3) um 180° nach oben geschwenktem Hebelarm 18 (Fig. 8) auch der zugeordnete untere Lenker 6 aus seiner aus den Fig. 1 und 2 ersichtlichen, nach unten ragenden Ausgangsstellung über das in die Verzahnung 16 eingreifende Ritzel 17 um etwa 180° bis an den äußeren Rand 13 des oberen Längsträgers 12 des Kastenaufbaus 1 heran geschwenkt wird. Dabei ist aus Fig. 8 ersichtlich, daß erst die bereits erwähnte Zurückversetzung des oberen Längsträgers 12 gegenüber dem unteren Längsträger 5 des Kastenaufbaus 1 ein ausreichend weites Hochschwenken der Lenker 6 zuläßt.

Damit das Oberteil 3 beim Wiederhochschwenken des Unterteils 2 der Seitenwand aus seiner in Fig. 8 dargestellten Öffnungs-Endstellung möglichst ohne einen zusätzlichen Kraftaufwand wieder mit seinem oberen Teil etwas nach oben und vorn hochgeschwenkt werden kann, ist an den Anlenkstellen 11 des oberen Lenkerpaares 9, 9 auf dem Dach 10 noch je eine gemäß dem Ausführungsbeispiel als Schraubendrehfeder ausgebildete Rückholfeder 19 angeordnet, die auf den zugeordneten Lenker 9 eine annähernd dem dortigen Auflagegewicht des Oberteils 3 entsprechende Rückschwenkkraft etwa bis zu dessen 30° aufwärts gerichteter Lage ausübt.

Wie insbesondere aus den Fig. 2 und 3 bis 6 ersichtlich ist, ragen die der Seitenwand zugeordneten Seitenpfosten 7 gegenüber den zugeordneten unteren und oberen Längsträgern 5 und 12 des Kastenaufbaus 1 bis in die äußere Ebene der geschlossenen Seitenwand vor, wobei die der Seitenwand zugeordneten Seitenpfosten 7 die Zahnstange 15 und das Ritzel 17 sowie bei geschlossener Seitenwand auch die unteren Lenker 6 in einem angepaßten rechteckigen Hohlprofil 20 aufnehmen, das lediglich an seiner äußeren Stirnseite die Ausschwenkbewegungen des Hebelarmes 18 und des unteren Lenkers 6 des Oberteils 3 zulassende Ausnehmungen 21 und 22 aufweist, von denen die letztere im Bereich der dort befindlichen Lagerstelle 23 des Lenkers 6 am Oberteil 3 mit einem Abschnitt 22a (Fig. 1 und 2) noch in die zugeordnete Seitenwand des Seitenpfostens 7 hineinreicht.

Das in den Fig. 9 und 10 dargestellte zweite Ausführungsbeispiel unterscheidet sich vom ersten Ausführungsbeispiel dadurch, daß das unten an Lenkern 6' angelenkte Oberteil 3 in an sich bereits bekannter Weise mit seinem in der Schließstellung oberen Ende beiderseits an je einem Schlitten 24 angelenkt ist, der mittels Rollen 25 in einer unter dem Dach 10' entlang der benachbarten Stirnwand 26 des Kastenaufbaus 1 festgelegten Führungsschiene 27 längsverschiebbar geführt ist. Dementsprechend befindet sich der Schlitten 24 bei geschlossener Seitenwand in der aus Fig. 9 ersichtlichen Weise am äußeren und bei ganz geöffneter Seitenwand in der aus Fig. 10 ersichtlichen Weise am inneren Ende der Führungsschiene 27. Die beiden Lenker 6' verlaufen bei diesem Ausführungsbeispiel außerhalb des Hohlprofils 20 jeweils neben dem zugeordneten Seitenpfosten 7, damit das Oberteil 3 in das Kasteninnere hochgeschwenkt werden kann. Sie weisen beide Außenkanten mit je einem geradlinigen Teil 6'a auf, der bei geschlossener Seitenwand an der Innenfläche des Oberteils 3 anliegt, wodurch dasselbe zugleich einfach und sicher in seiner Schließstellung festgelegt wird.

Besonders vorteilhaft ist es, daß das gemäß Fig. 1 in seiner Schließstellung mit einer oberen Randleiste 2a über eine untere Randleiste 3a des Oberteils 3 greifende Unterteil 2 zu Beginn seiner Abklappung infolge der zunächst nur minimalen Hubbewegung des unteren Anlenkpunktes 15b der Zahnstange 15 an dem in der Schließstellung nach unten ragenden Hebelarm 8 des Unterteils 2 gemäß Fig. 2 der Aufwärtsschwenkung des Oberteils zunächst um einen Winkel $\alpha$ von etwa 10 bis 15° voreilt — und umgekehrt —, womit beim Schließen der Seitenwand stets der richtige Übergriff der Randleiste 2a des Unterteils 2 über die Randleiste 3a des Oberteils 3 gewährleistet und überdies die Gefahr vermindert wird, daß eine das Unterteil zum Schließen der Seitenwand hochklappende Bedienungsperson mit ihrer Hand zwischen die sich schließenden beiden Teile der Seitenwand geraten könnte.

Wenn die vorstehend beschriebene und in der Zeichnung dargestellte konstruktive Ausbildung des Zahnstangen-Ritzeltriebes auch bevorzugt wird, so könnte derselbe aber auch abgewandelt sein. Beim zweiten Ausführungsbeispiel könnten die Lenker 6' beispielsweise im Hohlprofil 20 der Seitenpfosten 7 verlaufen, sofern von ihren Lagerstellen 23 ausgehende Lagerzapfen innerhalb der Ebene des Oberteils 3 an dessen Seitenkanten gelagert sind und die Seitenpfosten 7 an ihrer zugeordneten Seite den Ausnehmungen 22 und 22a entsprechende Ausnehmungen aufweisen, die diese Lagerzapfen in den beiden Endstellungen der Lenker 6' aufnehmen.

Wie aus Fig. 7a hervorgeht, könnten die Rückholfedern 19 auch lenkerseitig jeweils in eine Querbohrung 28 des zugeordneten Lenkers 9 und dachseitig in eine wählbare von mehreren entlang einem Kreisbogen angeordneten Querbohrungen 29 des jeweils zugeordneten Lagers 11 eingehängt sein, womit diese Federn in wählbarer Wirkungsweise auch noch das Hochschwenken des Oberteils 3 unterstützen können.

Statt auf einem Lastkraftwagen oder einem zugeordneten Anhänger könnte der Kastenaufbau 1 schließlich auch stationär, beispielsweise auf der Laderampe einer Brauerei oder eines sonstigen Getränkevertriebes als zusätzliches witterungsgeschütztes Depot, angeordnet sein.

**Patentansprüche**

1. Kastenaufbau, insbesondere für Lastfahrzeuge, mit einer Seitenwand aus einem um untere Anlenkstellen (4) des Kastenaufbaus abklappbaren Unterteil (2) und einem Oberteil (3), das jeweils beiderseits unten über ein Lenkerpaar in einer in der Schließstellung etwa mittleren Höhe an den benachbarten Seitenpfosten (7) und oben entweder über ein weiteres Lenkerpaar auf dem Dach oder beiderseits an je einem Schlitten angelenkt ist, der entlang einer an der jeweiligen Stirnwand dicht unter dem Dach quer zur Seitenwand verlaufenden Führungsschiene verschiebbar ist, und das über eine vom unteren Bereich des Unterteils ausgehende und beispielsweise an seinen beiden unteren Lenkern angreifende Mitnahmeeinrichtung beim Abklappen des Unterteils aus seiner Schließstellung jeweils über oder unter das Dach hochgeschwenkt wird, und umgekehrt, dadurch gekennzeichnet, daß die Mitnahmeeinrichtung aus beiderseits der Seitenwand je einem am zugeordneten Seitenpfosten (7) geführten Zahnstangen-Ritzeltrieb (15, 17) besteht, dessen Zahnstange (15) mit einem unteren Stangenteil (15a) an einem vom Unterteil (2) in dessen Schließstellung nach unten ragenden Hebelarm (18) angelenkt ist und oben mit einer entlang der Außenseite der Anlenkstelle des zugeordneten unteren Lenkers (6 bzw. 6') verlaufenden Verzahnung (16) in das an diesem Lenker (6 bzw. 6') axial zu dessen Lagerstelle (Lagerbolzen 8) festgelegte Ritzel (17) eingreift, dessen Teilkreis-Durchmesser (D) etwa 1,5mal so groß wie die Länge (l) des Hebelarmes (18) ist.

2. Kastenaufbau nach Anspruch 1, dadurch gekennzeichnet, daß das Unterteil (2) an seinem oberen Rand eine in der Schließstellung der Seitenwand eine am unteren Rand des Oberteils (3) befindliche Randleiste (3a) von außen übergreifende obere Randleiste (2a) aufweist.

3. Kastenaufbau nach Anspruch 1 oder 2, dadurch gekennzeichnet, daß die Seitenpfosten (7) mindestens die Zahnstangen (15) und Ritzel (17) in einem angepaßten rechteckigen Hohlprofil (20) aufnehmen.

4. Kastenaufbau nach Anspruch 3 mit einem auf das Dach schwenkbaren Oberteil der Seitenwand, dadurch gekennzeichnet, daß die Seitenpfosten (7) bei geschlossener Seitenwand auch die unteren Lenker (6) in ihrem Hohlprofil (20) aufnehmen, das lediglich im Bereich seiner äußeren Stirnseite die Ausschwenkbewegungen des Hebelarmes (18) des Unterteils (2) und des unteren Lenkers (6) des Oberteils (3) zulassende Ausnehmungen (21, 22, 22a) aufweist (Fig. 1 bis 8).

5. Kastenaufbau nach einem der vorhergehenden Ansprüche, dadurch gekennzeichnet, daß die oberen Lenker (9) eine annähernd der halben Höhe des Oberteils (3) entsprechende Länge aufweisen und an ihren auf dem Dach (10) befindlichen Anlenkstellen (Lager 11) je eine Rückholfeder (19) angeordnet ist, die auf den zugeordneten Lenker (9) eine annähernd dem dortigen Auflagegewicht des Oberteils (3) entsprechende Rückschwenkkraft etwa bis zu dessen 30° aufwärts gerichteter Lage ausübt (Fig. 1 bis 8).

6. Kastenaufbau nach einem der vorhergehenden Ansprüche, dadurch gekennzeichnet, daß das Oberteil (3) an seinem oberen Rand eine quer nach dem Dach (10) hin vorragende Deckleiste (14) aufweist, an deren äußerem Rand die oberen Lenker (9) angelenkt sind und die bei der Schließstellung des Oberteils (3) über den benachbarten Rand (13) des Daches (10) greift (Fig. 1, 2 und 7).

7. Kastenaufbau nach Anspruch 3 mit einem unter das Dach schwenkbaren Oberteil der Seitenwand, dadurch gekennzeichnet, daß die unteren Lenker (6') außerhalb des Hohlprofils (20) jeweils neben dem zugeordneten Seitenpfosten (7) verlaufen und an ihren Außenkanten je einen geradlinigen Teil (6'a) aufweisen, der bei geschlossener Seitenwand an der Innenfläche des Oberteils (3) anliegt (Fig. 9 und 10).

8. Kastenaufbau nach Anspruch 5, dadurch gekennzeichnet, daß die Rückholfedern (19) lenkerseitig jeweils in eine Querbohrung (28) des zugeordneten Lenkers (9) und dachseitig in eine wählbare von mehreren entlang einem konzentrischen Kreisbogen angeordneten Querbohrungen (29) des jeweils zugeordneten Lagers (11) eingehängt sind.

**Claims**

1. A box body, in particular for lorries, having a side wall comprising a lower portion (2) which can be swung down about lower pivot mounting points (4) on the box body, and an upper portion (3) which at each of its two sides is pivotally connected in its lower part to the adjacent side posts (7) by way of a pair of links at a substantially middle height in the closed position and is pivotally connected in its upper part either by way of a further pair of links of the roof or on each of its two sides to a respective slide which is slidable along a guide rail which extends at the respective end wall closely under the roof transversely with respect to the side wall, said upper portion being pivoted upwardly above or beneath the roof respectively when the lower portion is swung down out of its closed position, by way of an entrainment means which goes from the lower region of the lower portion and which engages for example its two lower links, characterised in that the entrainment means comprises at both sides of the side wall a respective rack-and-pinion transmission means (15, 17) which is carried on the associated side post (7) and whose rack (15) is pivoted with a lower rack portion (15a) to a lever arm (18) extending downwardly from the lower portion (2) in the closed position thereof, and at the top engages with a tooth configuration (16) extending along the outside of the pivot mounting point of the associated lower link (6 or 6' respectively) into the pinion (17) which is fixed to said link (6 or 6' respectively) axially with respect to the mounting point (mounting pin 8) thereof, the pitch diameter (D) of said pinion being about 1.5 times the length (1) of the lever arm (18).

2. A body according to claim 1 characterised in that at its upper edge the lower portion (2) has an upper edge bar (2a) which in the closed position of the side wall engages from the outside over an edge bar (3a) at the lower edge of the upper portion (3).

3. A body according to claim 1 or claim 2, characterised in that the side posts (7) carry at least the racks (15) and pinions (17) in a square or rectangular hollow member (20) adapted thereto.

4. A body according to claim 3 having a side wall upper portion which is pivotable on to the roof, characterised in that when the side wall is closed the side posts (7) also accomodate the lower links (6) in their hollow member (20) which is provided only in the region of its outer front side with openings (21, 22, 22a) permitting the outward pivotal movements of the lever arm (18) of the lower portion (2) and the lower link (6) of the upper portion (3) (fig. 1 to 8).

5. A body according to one of the preceding claims, characterised in that the upper links (9) are of a length which approximately corresponds to half the height of the upper portion (3) and a respective return spring (19) is arranged at their respective pivot mounting points (mountings 11) on the roof, which return spring applies to the associated link (9) a pivotal return force approximately corresponding to the bearing weight at that location of the upper portion (3), approximately as far as a 30° upwardly directed position thereof (fig. 1 to 8).

6. A body according to one of the preceding claims, characterised in that at its upper edge the upper portion (3) has a cover bar (14) which projects transversely towards the roof (10) and to the outer edge of which the upper links (9) are pivotally connected and which in the closed position of the upper portion (3) engages over the adjacent edge (13) of the roof (10) (fig. 1, 2 and 7).

7. A body according to claim 3 having a side wall upper portion which is pivotable below the roof, characterised in that the lower links (6') respectively extend outside the hollow member (20) beside the associated side post (7) and at their outside edges each have a straight part (6a) which when the side wall is closed bears against the inside surface of the upper portion (3) (fig. 9 and 10).

8. A body according to claim 5, characterised in that at the link end the return springs (19) are respectively engaged into a transverse bore (28) in the associated link (9) while at the roof end they are engaged into a selectible one of a plurality of transverse bores (29) in the respectively associated mounting (11), said transverse bores being disposed along a concentric circular arc.

## Revendications

1. Caisse de camion notamment, avec une paroi latérale composée d'une partie inférieure (2) pouvant se rabattre autour de points d'articulation (4) de la caisse et d'une partie supérieure (3), qui s'articule sur ses deux côtés inférieurs, par l'intermédiaire de deux bras oscillants et à mi-hauteur environ de la paroi fermée, sur des montants latéraux adjacents (7), et sur ses deux côtés supérieurs, soit par l'intermédiaire de deux autres bras oscillants prévus sur le plafond, soit sur des coulisseaux bilatéraux mobiles sur des glissières transversales à la paroi latérale et prévues juste au-dessous du plafond, sur la paroi frontale correspondante, la partie supérieure (3) pivotant vers le haut à partir de sa position de fermeture, au dessus ou au-dessous du plafond et avec le rabattement de la partie inférieure, et inversement, par l'intermédiaire d'un dispositif d'entraînement qui part de la section inférieure de la partie (2) et attaque par exemple les deux bras oscillants inférieure, caractérisée en ce que le dispositif d'entraînement se compose d'un engrenage par roue dentée et crémaillère (15, 17), prévu des dexu côtés de la paroi latérale sur le montant latéral (7) correspondant, et qui présente une crémaillère (15) dont la tige inférieure (15a) s'articule sur un bras de levier (18) dépassant vers le bas la partie inférieure (2) fermée et dont la denture supérieure (16), prévue le long du côté externe du point d'articulation du bras oscillant correspondant (6 et/ou 6'), engrène avec le pignon (17) fixé sur le bras précité (6 et/ou 6'), dans l'axe de son point d'appui (axe 8), le diamètre primitif (D) du pignon (17) étant pratiquement égal à 1,5 fais la longueur (1) du bras de levier (18).

2. Caisse selon la revendication 1, caractérisé en ce que la partie inférieure (2) présente à son extrémité supérieure un rebord (2a), qui recouvre de l'extérieur un rebord (3a) situé, en position de fermeture de la paroi latérale, à l'extrémité inférieure de la partie supérieure (3).

3. Caisse selon une des revendications 1 et 2, caractérisée en ce que les montants latéraux (7) recoivent au moins les crémaillères (15) et pignons (17) dans un profil creux rectangulaire (20) adéquat.

4. Caisse selon la revendication 3 avec une partie supérieure de la paroi latérale pouvant pivoter sur le plafond, caractérisée en ce que les montants latéraux (7) recoivent également les bras oscillants inférieurs (6) dans le profil creux (20), lorsque la paroi latérale est fermée, ce profil (20) présentant dans la seule zone de son côté frontal externe des évidements (21, 22, 22a) qui autorisent les mouvements de pivotement du bras de levier (18) de la partie inférieure (2) et du bras oscillant inférieur (6) de la partie supérieure (3) (fig. 1 à 8).

5. Caisse suivant une quelconque des revendications précédentes, caractérisée en ce que les bras oscillants supérieurs (9) ont une longueur pratiquement égale à la demi-heuteur de la partie supérieure (3) et présentent un ressort de rappel (19), monté sur chacun de leur point d'articulation (palier 11) du plafond (10) et exerçant sur le bras correspondant (9) une force de retour, qui équivaut à peu près au poids de charge local de la partie supérieure (3), jusqu'à ce que cette dernière soit orientée de 30° vers l'avant (fig. 1 à 8).

6. Caisse selon une quelconque des revendications précédentes, caractérisée en ce que la partie supérieure (3) présente sur son bord supérieur une barre de fermeture (14) qui forme une saillie transversale orientée vers le plafond (10), sur le rebord externe de laquelle s'articule le bras oscillant supérieur (9) et qui s'engage sur le rebord adjacent (13) du plafond (10), lorsque la partie supérieure (3) est en position de fermeture (fig. 1, 2 et 7).

7. Caisse selon la revendication 3 avec une partie supérieure de la paroi latérale pouvant pivoter sous le plafond, caractérisée en ce que les bras oscillants inférieurs (6') se situent respectivement en dehors du profil creux (20), à côté du montant latéral correspondant (7), leur rebord externe présentant une section linéaire (6'a) qui s'applique sur la face interne de la partie supérieure (3), lorsque la paroi latérale est en position de fermeture (fig. 9 et 10).

8. Caisse selon la revendication 5, caractérisée en ce que les ressorts de rappel (19) sont accrochés, côté bras d'une part, dans un alésage transversal (28) du bras oscillant correspondant (9), côté plafond d'autre part, dans l'un des multiples alésages transversaux (29) du palier respectif (11), ces alésages (29) étant disposés sur un arc de cercle concentrique.

Fig.1

Fig.2

Fig.3

Fig.4

Fig.5

Fig.6

Fig.7 .

Fig.7a

0 101 475

Fig.8

# Fig.9

Fig.10